# EUROPÄISCHE PATENTANMELDUNG

(11) **EP 4 742 647 A1**
(43) Veröffentlichungstag der Anmeldung: **13.05.2026**
(21) Anmeldenummer: 24211485.8
(22) Anmeldetag: 07.11.2024
(51) Int. Cl.: H04N 1/60, G01J 3/46

(54) **VERFAHREN ZUM DRUCKEN EINES ZU DRUCKENDEN DEKORS UND VORRICHTUNG**

(71) Anmelder: SWISS KRONO Tec AG, 6004 Luzern (CH)
(72) Erfinder: Dicke, Sebastian, 16868 Bantikow (DE)
(74) Vertreter: Gramm, Lins & Partner Patent- und Rechtsanwälte PartGmbB

(57) **Zusammenfassung**

Die Erfindung betrifft Verfahren zum Drucken eines zu druckenden Dekors auf eine Mehrzahl von Druck-Oberflächen mittels einer digitalen Druckanlage, wobei das Verfahren die folgenden Schritte umfasst:
a) Bereitstellen einer digitalen Vorlage und von Referenz-Farbmessdaten eines zu druckenden Dekors, die durch Messen von Farbmessgrößen eines unverarbeiteten Dekors ermittelt wurden,
b) Drucken zumindest eines Teils des zu druckenden Dekors anhand der digitalen Vorlage auf eine Druck-Oberfläche mit Druckeinstellungen der digitalen Druckanlage, so dass ein unverarbeitetes Druck-Vorexemplar entsteht,
c) Messen von Farbmessgrößen des unverarbeiteten Druck-Vorexemplars, so dass Druck-Farbmessdaten erhalten werden,
d) Vergleichen der Druck-Messdaten mit den Referenz-Farbmessdaten und Ermitteln eines ersten Maßes einer Abweichung der Druck-Farbmessdaten von den Referenz-Farbmessdaten,
e) Ändern der digitalen Vorlage und/oder der Druckeinstellungen der digitalen Druckanlage, falls das erste Maß der Abweichung ein erstes vorbestimmtes Kriterium erfüllt,
f) Wiederholen der Schritte b) bis e), falls das erste Maß der Abweichung das erste vorbestimmte Kriterium erfüllt.

## Beschreibung

Die vorliegende Erfindung betrifft ein Verfahren zum Drucken eines zu druckenden Dekors auf eine Mehrzahl von Druck-Oberflächen mittels einer digitalen Druckanlage sowie eine Vorrichtung zum Durchführen des Verfahrens.

Aus der EP 4 216 531 A1 ist ein Verfahren zum Bedrucken einer Papierbahn mit einem Druckmotiv mittels einer Digitaldruckanlage bekannt. Dabei werden zunächst ein Referenzdekormuster, das einen Ausschnitt eines digitalen Abbildes des Urmusters des Druckmotivs enthält, sowie ein hyperspektraler Referenz-Datensatz zu dem Referenzdekormuster bereitgestellt. Anschließend wird ein Exemplar des Referenzdekormusters gedruckt und ein hyperspektraler Datensatz zu dem gedruckten Exemplar erstellt. Referenzexemplar und das gedruckte Exemplar werden dazu als Ganzes imprägniert und auf einem Kern verpresst und anschließend auf Farbtreue und Reproduzierbarkeit überprüft.

Nachteilig ist, dass auch bei einem derartigen Druckverfahren Abweichungen zwischen den gedruckten Dekoren und den gewünschten Dekoren bestehen. Die Farbunterschiede der Dekore zueinander kann nicht prozesssicher festgestellt werden, so dass häufig mehrere Korrekturschleifen erforderlich sind, um gedruckte Dekore zu erhalten, die den Anforderungen entsprechen. Bei jeder Korrektur fällt aufgrund der Dekore, die nicht den Anforderungen entsprechen, Ausschuss an, so dass die Herstellungskosten insgesamt entsprechend vergrößert werden.

Der Erfindung liegt daher die Aufgabe zugrunde, ein Verfahren sowie eine Vorrichtung bereitzustellen, die die Nachteile beheben oder zumindest abmildern. Die Erfindung löst die gestellte Aufgabe durch ein Verfahren zum Drucken eines zu druckenden Dekors auf eine Mehrzahl von Druck-Oberflächen mittels einer digitalen Druckanlage, wobei das Verfahren die folgenden Schritte umfasst:
a) Bestimmen einer digitalen Vorlage und von Referenz-Farbmessdaten eines zu druckenden Dekors, die durch Messen von Farbmesswerten eines unverarbeiteten Dekors ermittelt wurden,
b) Drucken zumindest eines Teils des zu druckenden Dekors anhand der digitalen Vorlage auf eine Druck-Oberfläche mit Druckeinstellungen der digitalen Druckanlage, so dass ein unverarbeitetes Druck-Vorexemplar entsteht,
c) Messen von Farbmessgrößen des unverarbeiteten Druck-Vorexemplars, so dass Druck-Farbmessdaten erhalten werden,
d) Vergleichen der Druck-Messdaten mit den Referenz-Farbmessdaten und Ermitteln eines ersten Maßes einer Abweichung der Druck-Farbmessdaten von den Referenz-Farbmessdaten,
e) Ändern der digitalen Vorlage und/oder der Druckeinstellungen der digitalen Druckanlage, falls das erste Maß der Abweichung ein erstes vorbestimmtes Kriterium erfüllt,
f) Wiederholen der Schritte b) bis e), falls das erste Maß der Abweichung das erste vorbestimmte Kriterium erfüllt.

Vorzugsweise wird im Verfahrensschritt b) das gesamte Dekor gedruckt.

Bei einem erfindungsgemäßen Verfahren werden Farbmessgrößen gemessen, also entsprechende Druck-Farbmessdaten aufgenommen, und mit hinterlegten Referenz-Farbmessdaten verglichen. Die Druck-Farbmessdaten werden anhand des unverarbeiteten Druck-Vorexemplars erfasst, das nach dem Drucken des Dekors auf die Druck-Oberfläche im Verfahrensschritt b) vorzugsweise nicht weiterverarbeitet wird. Es erfolgt insbesondere keine weitere Imprägnierung mit einem Kunstharz oder einem Lack, kein Aufkaschieren oder Auflaminieren auf einen Kern, beispielsweise eine Holzwerkstoffplatte, und kein Verpressen unter Druck- und Temperatureinfluss, bevor die Druck-Farbmessdaten erfasst werden. Alle diese Schritte sind bei der Herstellung von Laminatpaneelen, die als Fußboden-, Wand- und/oder Deckenverkleidung oder als Möbelplatten verwendet werden können, von Vorteil und aus dem Stand der Technik bekannt. Sie werden bei der Herstellung derartiger Gegenstände vorzugsweise durchgeführt, bei einem erfindungsgemäßen Verfahren werden jedoch nach dem Drucken des Dekors auf die Druck-Oberfläche zunächst die Farbmessgrößen gemessen. Im Sinne der vorliegenden Erfindung ist ein Vorexemplar noch nicht weiterverarbeitet, außer dass es gegebenenfalls nach dem Drucken getrocknet wurde.

Die Referenz-Farbmessdaten wurden erfindungsgemäß durch Messen von Farbmessgrößen an einem unverarbeiteten Dekor, vorzugsweise an einem unverarbeiteten Referenz-Dekor, erhalten. Vorzugsweise wird das Dekor, an dem die Farbmessgrößen gemessen werden, um Farbmesswerte zu erhalten, direkt nach dem Drucken des jeweiligen Dekors auf die Druckoberfläche dem Sensor zugeführt, mit dem die Messung durchgeführt werden soll. In einigen Ausgestaltungen des Verfahrens ist es sinnvoll, das Dekor nach dem Drucken zu trocknen und es erst dann dem Sensor zuzuführen. Es ist von Vorteil, wenn das Druck-Vorexemplar die gleichen Schritte vor dem Messen der Farbmessgrößen durchläuft, die auch das Referenzdekor durchlaufen hat, bevor die Referenz-Farbmessdaten erhalten wurden. Das Referenzdekor wird daher auch als Referenz-Vorexemplar bezeichnet.

Der Vergleich des unverarbeiteten, gedruckten Druck-Vorexemplars mit einem entsprechend unverarbeiteten, gedruckten Referenz-Vorexemplar erfolgt anhand der verschiedenen Farbmessdaten. Es werden die Druck-Farbmessdaten mit den Referenz-Farbmessdaten verglichen, die sich erfindungsgemäß beide auf unverarbeitete Dekore, also Vorexemplare beziehen. Die Referenz-Farbmessdaten entsprechen dabei insbesondere den Daten, die an einem Referenz-Vorexemplar gemessen wurden, das als Referenz dienen kann, also exakt dem gewünschten, unverarbeitetem Dekor entspricht.

Die digitale Vorlage entspricht vorzugsweise den Druck-Anweisungen für die digitale Druckanlage, aus denen sich für die digitale Druckanlage ergibt, welche Stelle der Druck-Oberfläche welchen Farbwert erhalten soll. Beispielsweise kann es sich bei der digitalen Vorlage um eine Bilddatei wie eine JPEG-Datei (Joint-Photographic-Experts-Group-Datei) oder eine tiff-Datei (Tagged-Image-File-Format-Datei) oder eine Druckdatei wie eine PDF-Datei (Portable-Document-Format-Datei), eine PCL-Datei (Printer-Command-Language-Datei) oder eine PostScript-Datei handeln. Eine derartige Druckdatei kann auch aus einer Bilddatei wie einer JPEG-Datei oder aus anderen Arbeitsdokumenten generiert werden. Von der digitalen Vorlage zu unterscheiden sind die Druckeinstellungen der digitalen Druckanlage, die nicht Teil der digitalen Vorlage sind. Diese sind vorzugsweise in einem digitalen Speicher in der digitalen Druckanlage gespeichert und enthalten insbesondere Informationen darüber, welche Menge welcher Tinte bei einem vorgegebenen Farbwert der digitalen Vorlage aufgebracht werden soll. Diese Druckeinstellungen enthalten also Informationen darüber, wie eine digitale Druckanlage auf die Druck-Anweisungen reagiert. Die Druckanlage wird verwendet, um eine Bild, das den Druck-Anweisungen und den darin enthaltenen Informationen entspricht, auf die Druck-Oberfläche aufzubringen. Diese Druck-Anweisungen enthalten dabei Informationen über Farben und Farbwerte und Tonwerte, die von der digitalen Druckanlage erzeugt werden sollen. Diese Druck-Anweisungen müssen von der digitalen Druckanlage in Informationen darüber übersetzt werden, wie viel einer Tinte einer bestimmten Farbe auf welche Stelle der Druck-Oberfläche aufgebracht werden soll. Dazu werden die Druckeinstellungen verwendet, die insofern einer Kalibrierung der digitalen Druckanlage entsprechen. Insbesondere bewirkt ein Ändern der Druckeinstellungen keine Anpassung der digitalen Vorlage, insbesondere der darin enthaltenen Farbwerte, und auch keine andere Vorverarbeitung der Druck-Anweisungen, wohl aber ein verändertes Druckergebnis.

Vorzugsweise ist das erste vorbestimmte Kriterium erfüllt, wenn eine Abweichung eines oder mehrerer der Druck-Farbmessdaten von dazu korrespondierenden Referenz-Farbmessdaten größer als ein erster für die entsprechende Messgröße vorbestimmter Grenzwert ist. Wenn bei dem erfindungsgemäßen Verfahren ein erstes Maß der Abweichung festgestellt wird, das ein erstes vorbestimmtes Kriterium erfüllt, beispielsweise einen ersten vorbestimmten Grenzwert für das erste Maß der Abweichung überschreitet, werden die digitale Vorlage und/oder die Druckeinstellungen der digitalen Druckanlage geändert. Dadurch wird erreicht, dass das erste Maß der Abweichung bei einem erneuten Druckvorgang mit der geänderten digitalen Vorlage und/oder den geänderten Druckeinstellungen der digitalen Druckanlage geringer ist. Gegebenenfalls ist dann das erste vorbestimmte Kriterium nicht mehr erfüllt, also beispielsweise der erste vorbestimmte Grenzwert für das erste Maß der Abweichung nicht mehr überschritten. Wenn das erste Maß der Abweichung das erste vorbestimmte Kriterium nicht erfüllt, entspricht das Druck-Vorexemplar qualitativ dem gewünschten, unverarbeitetem Dekor. Wenn das erste Maß der Abweichung das erste vorbestimmte Kriterium hingegen erfüllt, ist eine Anpassung der digitalen Vorlage und/oder der Druckeinstellungen erforderlich. Das Druck-Vorexemplar entspricht in diesem Fall nicht den Anforderungen an die Druckqualität und muss als Ausschuss aussortiert werden. Das erste Maß der Abweichung wird vorzugweise für jede Messgröße, die gemessen und verglichen wird, separat bestimmt.

Vorteilhaft an dem erfindungsgemäßen Verfahren ist, dass die Farbabweichung der Dekore durch die digitale Druckanlage prozesssicher festgestellt und damit auch behoben werden kann. Weitere Einflüsse, wie beispielsweise Einflüsse des Imprägnierens und des Verpressens, bleiben unberücksichtigt, so dass sich deren Einflüsse auf die Farbtreue nicht in der festgestellten Farbabweichung der Vorexemplare widerspiegeln. Zugleich entfällt durch das fehlende Imprägnieren und Verpressen der nicht den Anforderungen an die Druckqualität entsprechenden Dekore ein erheblicher verfehlter Produktionsaufwand, so dass die Herstellungskosten effektiv reduziert werden können.

Vorzugsweise handelt es sich bei der Druck-Oberfläche um die Oberseite einer Holzwerkstoffplatte, beispielsweise einer HDF (high density fibreboard) oder einer MDF (medium density fibreboard) Platte oder einer OSB (oriented strand board). In vorteilhaften Ausgestaltungen des Verfahrens wird die Oberseite der Holzwerkstoffplatte vorbehandelt, so dass die Druck-Oberfläche entsteht. Die Oberseite der Holzwerkstoffplatte wird beispielswiese angeschliffen, mit einem Kunstharz grundiert, farblich grundiert, beispielsweise indem eine oder mehrere Lagen einer Farbe, beispielsweise weiß, aufgebracht werden, und/oder mit einem Primer versehen, auf den später das Dekor gedruckt wird. Vorzugsweise wird die Oberfläche der Holzwerkstoffplatte wenigstens einmal, vorzugsweise nach jedem der genannten Vorbereitungsschritte, in dem eine Flüssigkeit auf die Oberseite aufgebracht wird, in einem Trockner getrocknet.

Vorzugsweise beinhaltet das Bereitstellen der Referenz-Farbmessdaten im Schritt a) folgende Schritte:
a1) Bereitstellen einer digitalen Vorlage eines zu druckenden Dekors,
a2) Drucken zumindest eines Teils des zu druckenden Dekors anhand der digitalen Vorlage auf eine Referenzoberfläche, so dass ein Referenz-Vorexemplar entsteht,
a3) Messen der Farbmessgrößen des unverarbeiteten Referenz-Vorexemplars, so dass die Referenz-Farbmessdaten erhalten werden.

Bevorzugt wird im Schritt a2) der gleiche Teil des zu druckenden Dekors gedruckt wie im Schritt b). Die im Laufe des Verfahrens zu bedruckenden Druck-Oberfläche entspricht vorzuweise der Referenzoberfläche beispielsweise in Material, Größe, Haptik und/oder Farbe. Je stärker die Druck-Oberfläche der Referenzoberfläche entspricht, desto genauer und leichter können die Referenz-Farbmessdaten mit den Druck-Farbmessdaten verglichen werden. Falls eine Abweichung zwischen Referenzoberfläche und Druck-Oberfläche bekannt ist, kann eine Umrechnung mithilfe eines Konvertierungstools erfolgen, so dass die Farbmessdaten einander besser entsprechen und besser vergleichbar sind.

Bevorzugt betreffen die Druck-Farbmessdaten die gleichen Stellen und/oder den gleichen Bereich des Dekors wie die Referenz-Farbmessdaten, so dass eine Vergleichbarkeit der Farbmessdaten gewährleistet ist. Vorzugsweise betreffen die Druck-Farbmessdaten und die Referenz-Farbmessdaten das gesamte Dekor oder den gesamten in Schritt b) gedruckten Teil des Dekors. Darunter wird insbesondere verstanden, dass eine Vielzahl von Messpunkten vorhanden ist, an denen die jeweiligen Farbmessdaten ermittelt werden, und dass diese Vielzahl von Messpunkten sich über das gesamte Dekor oder den in Schritt b) gedruckten Teil des Dekors erstrecken. Alternativ dazu betreffen die Druck-Farbmessdaten und die Referenz-Farbmessdaten nicht das gesamte Dekor. Beispielsweise kann es zweckmäßig sein, Druck-Farbmessdaten und Referenz-Farbmessdaten an einer oder mehreren Stellen und/oder in einem oder mehreren Bereichen des Dekors, beispielsweise an markanten Stellen, zu erheben. Vorzugsweise sind die Messpunkte jeweils äquidistant über den erfassten Bereich oder die erfassten Stellen verteilt.

Vorzugsweise beinhalten die Farbmessdaten hyperspektrale Daten. Dies gilt bevorzugt sowohl für die Druck-Farbmessdaten als auch für die Referenz-Farbmessdaten.

Die jeweiligen Farbmessdaten werden vorzugsweise durch eine hyperspektrale Flächenmessung erhalten. Dabei wird der Farbmesswert für einen Mess-Pixel ermittelt, indem eine Fläche, deren Teil der Mess-Pixel ist, vermessen und ein Mittelwert gebildet, der dann als Farbmesswert für den jeweiligen Mess-Pixel hinterlegt wird. Die Fläche, die dabei vermessen wird, ist größer als der Mess-Pixel und beinhaltet vorzugsweise weitere Pixel. Der Mess-Pixel befindet sich vorzugsweise in der Mitte der Fläche. Der Mittelwert kann über alle gemessenen Pixel errechnet werden. Die jeweiligen Daten der vermessenen Pixel können aufaddiert und durch die Anzahl der Pixel geteilt werden, um den Mittelwert zu bestimmen. Den Daten der verschiedenen Pixel werden bevorzugt unterschiedliche Gewichte in der so erstellten Summe gegeben, wobei dem Mess-Pixel das höchste Gewicht gegeben wird. Je weiter ein Pixel von dem Mess-Pixel entfernt ist, desto kleiner ist vorzugweise das den zugehörigen Daten gegebene Gewicht.

Da sowohl die Druck-Farbmessdaten als auch die Referenz-Farbmessdaten an einem Vorexemplar gemessen wurden, können durch den Vergleich nur Abweichungen bestimmt werden, die durch die zum Herstellen des jeweiligen Vorexemplars notwendigen und bereits durchgeführten Arbeitsschritte hervorgerufen wurden. Die meisten dieser Abweichungen werden durch die digitale Druckanlage und die darin verwendete Tinte hervorgerufen. Abweichungen, die durch den Einfluss späterer Arbeitsschritte hervorgerufen werden, können naturgemäß nicht erkannt werden. Um auch diese zu erfassen und gegebenenfalls notwendige Korrekturmaßnahmen und Anpassungen vornehmen zu können, ist es von Vorteil, auch das verarbeitete Dekor, beispielsweise in Form einer hergestellten Laminatplatte zu vermessen und entsprechende Farbmesswerte zu bestimmen. Diese werden folglich nicht durch Messungen an einem Vorexemplar, sondern an einem Exemplar erhalten. Um einen Vergleich mit Soll-Werten durchführen zu können, ist es sinnvoll, wenn auch an einem Referenzexemplar entsprechende Messungen durchgeführt werden. Die dabei entstehenden Referenz-Exemplar-Messdaten werden vorzugsweise im Schritt a) bereitgestellt.

Vorzugsweise beinhaltete der Schritt a) daher auch das Bereitstellen von Referenz-Exemplar-Messdaten, wobei das Verfahren ferner umfasst:
- Imprägnieren des Druck-Vorexemplars und Verpressen auf einem Kern mit vorbestimmten Weiterverarbeitungsparametern, so dass ein Druck-Exemplar entsteht,
- Messen von Farbmessgrößen des Druck-Exemplars, so dass Druck-Exemplar-Farbmessdaten erhalten werden,
- Vergleichen der Druck-Exemplar-Farbmessdaten mit den Referenz-Exemplar-Farbmessdaten und Ermitteln eines zweiten Maßes einer Abweichung der Druck-Exemplar-Farbmessdaten von den Referenz-Exemplar-Farbmessdaten,
- Ändern der digitalen Vorlage, der Druckeinstellungen der digitalen Druckanlage und/oder der Weiterverarbeitungsparameter, falls das zweite Maß der Abweichung ein zweites vorbestimmtes Kriterium erfüllt,
- Wiederholen der Schritte b) bis j), falls das Maß der Abweichung das zweite vorbestimmte Kriterium erfüllt.

Die Weiterverarbeitungsparameter umfassen beispielsweise ein Auftragsgewicht des Imprägniermittels, eine Trocknungstemperatur, eine Trocknungszeit, einen Pressdruck, eine Presstemperatur und/oder eine Presszeit.

Das zweite vorbestimmte Kriterium ist vorzugsweise erfüllt, wenn eine Abweichung eines oder mehrerer der Druck-Exemplar-Farbmessdaten von dazu korrespondierenden Referenz-Exemplar-Farbmessdaten größer als ein für die entsprechende Farbmessgröße zweiter vorbestimmter Grenzwert ist. Vorzugsweise entspricht der zweite vorbestimmte Grenzwert dem ersten vorbestimmten Grenzwert. Alternativ dazu kann der zweite vorbestimmte Grenzwert kleiner oder größer als der erste vorbestimmte Grenzwert sein.

Der erste vorbestimmte Grenzwert und/oder der zweite vorbestimmte Grenzwert sind vorzugsweise farb- und/oder ortsabhängig.

Vorzugsweise umfasst das Bereitstellen von Referenz-Exemplar-Farbmessdaten folgende Schritte:
a4) Imprägnieren eines Referenz-Vorexemplars und Verpressen auf einem Kern mit den Weiterverarbeitungsparametern, so dass ein Referenz-Exemplar entsteht,
a5) Messen von Messgrößen des Referenz-Exemplars, so dass Referenz-Exemplar-Messdaten entstehen.

Vorzugsweise wird nicht für jedes überprüfte Vorexemplar auch das entsprechende Exemplar überprüft, sondern nur für höchstens jede zweite, bevorzugt höchstens jede fünfte, besonders bevorzugt höchstens jede zehnte, in dem Verfahren in Schritt b) bedruckte Druck-Oberfläche.

Bevorzugt werden die Schritte c) bis f) für jede in dem Verfahren in Schritt b) bedruckte Druck-Oberfläche durchgeführt. Vorzugsweise werden die Schritte c) bis f) für eine erste Anzahl an bedruckten Druck-Oberflächen und die Überprüfung der Exemplare für eine zweite Anzahl an bedruckten Druck-Oberflächen durchgeführt, wobei die erste Anzahl bevorzugt größer ist als die zweite Anzahl. Alternativ dazu kann die erste Anzahl der zweiten Anzahl entsprechen oder kleiner als diese sein.

Vorzugsweise erfolgt das Messen von Farbmessgrößen des unverarbeiteten Druck-Vorexemplars in der digitalen Druckanlage. Bevorzugt erfolgt das Messen von Farbmessgrößen des unverarbeiteten Druck-Vorexemplars zumindest teilweise, vorzugsweise jedoch vollständig, während des Druckens zumindest eines Teils des zu druckenden Dekors im Verfahrensschritt b). Auf diese Weise kann eine besonders effiziente und kostengünstige Farbfreigabe der Dekore erfolgen.

Vorzugsweise erfolgt das Messen von Farbmessgrößen des unverarbeiteten Referenz-Vorexemplars in der digitalen Druckanlage. Bevorzugt erfolgt das Messen von Farbmessgrößen des unverarbeiteten Referenz-Vorexemplars zumindest teilweise, vorzugsweise jedoch vollständig, während des Druckens zumindest eines Teils des zu druckenden Dekors im Verfahrensschritt a2).

Bevorzugt betreffen die Druck-Exemplar-Farbmessdaten die gleichen Stellen und/oder den gleichen Bereich wie die Referenz-Exemplar-Farbmessdaten.

Vorzugsweise umfassen die Referenz-Farbmessdaten und die Druck-Farbmessdaten einerseits und/oder die Referenz-Exemplar-Farbmessdaten und die Druck-Exemplar-Farbmessdaten andererseits jeweils wenigstens eine Farbintensität und/oder wenigstens eine Luminanz. Bevorzugt ist die wenigstens eine Farbintensität und/oder die wenigstens eine Luminanz einer bestimmten Farbe. Unter einer Farbintensität wird insbesondere ein Maß für die Sättigung der jeweiligen Farbe verstanden.

Vorzugsweise erfolgt das Messen von Farbmessgrößen des unverarbeiteten Druck-Vorexemplars und das Messen von Farbmessgrößen des unverarbeiteten Referenz-Vorexemplars unter ersten vorbestimmten Lichtbedingungen. Dadurch wird eine gute Vergleichbarkeit der Druck-Farbmessdaten mit den Referenz-Farbmessdaten sichergestellt. Dabei sind die ersten Lichtbedingungen für beide Messungen identisch.

Bevorzugt erfolgt das Messen von Farbmessgrößen des Druck-Exemplars und das Messen von Farbmessgrößen des Referenz-Exemplars unter zweiten vorbestimmten Lichtbedingungen. Dabei sind die zweiten Lichtbedingungen für beide Messungen identisch. Vorzugsweise entsprechen die ersten vorbestimmten Lichtbedingungen den zweiten vorbestimmten Lichtbedingungen. Beispielsweise können Messungen unter Normlicht, insbesondere D50-Normlicht oder D65-Normlicht, unter Mischlicht oder unter Tageslicht erfolgen. Es besteht die Möglichkeit, dass die Messungen jeweils mehrmals unter verschiedenen Lichtbedingungen durchgeführt werden, so dass verschiedene Messdaten für die jeweiligen Lichtbedingungen erhalten werden und eine Farbtreue bei verschiedenen Lichtbedingungen gewährleistet werden kann.

Eine Weiterbildung der Erfindung zeichnet sich dadurch aus, dass im Schritt b) nur ein Teil des zu druckenden Dekors auf eine Druck-Oberfläche gedruckt wird, wobei das Verfahren ferner folgende Schritte umfasst:
g) Drucken des vollständigen, zu druckenden Dekors anhand der digitalen Vorlage auf eine erste Vielzahl an Druck-Oberflächen mit den Druckeinstellungen der digitalen Druckanlage.

Das Drucken des vollständigen, zu druckenden Dekors auf die erste Vielzahl an Druck-Oberflächen stellt eine Serienproduktion dar. Die erste Vielzahl an Druck-Oberflächen beträgt vorzugsweise mehr als 2, bevorzugt größer als 10, besonders bevorzugt größer als 100, insbesondere größer als 1000. Vorteilhaft an diesem Verfahren ist, dass die Farbfreigabe für die Serienproduktion auf kostengünstige Weise erfolgen kann.

Von dem zu druckenden Dekor kann zunächst ein Teilausschnitt als digitale Vorlage ausgewählt werden, um im Schritt b) zunächst nur diesen Teilausschnitt des zu druckenden Dekors auf eine Druck-Oberfläche zu drucken. Für das Drucken des vollständigen, zu druckenden Dekors im Schritt I) wird dann vorzugsweise anhand der digitalen Vorlage eine Produktionsdatei erstellt, in der die Änderungen, die an der digitalen Vorlage vorgenommen wurden, berücksichtigt werden. Alternativ dazu kann die Produktionsdatei einer Gesamtvorlagedatei entsprechen, anhand derer die digitale Vorlage erstellt wurde. In beiden Fällen erfolgt das Drucken des vollständigen, zu druckenden Dekors für das Verständnis der vorliegenden Erfindung "anhand der digitalen Vorlage".

Gemäß einem zweiten Aspekt betrifft die Erfindung eine Vorrichtung zum Durchführen des erfindungsgemäßen Verfahrens. Bevorzugt weist die Vorrichtung eine digitale Druckanlage auf, die eingerichtet ist zum Drucken zumindest eines Teils des zu druckenden Dekors anhand der digitalen Vorlage auf eine Druck-Oberfläche mit Druckeinstellungen. Vorzugsweise weist die Vorrichtung wenigstens einen Sensor auf, der eingerichtet ist zum Messen von Farbmessgrößen des unverarbeiteten Druck-Vorexemplars, so dass Druck-Farbmessdaten erhalten werden. Bevorzugt umfasst die Vorrichtung eine elektrische Steuerung, beispielsweise eine elektronische Datenverarbeitungseinrichtung, auf der Referenz-Farbmessdaten und vorzugsweise Referenz-Exemplar-Farbmessdaten hinterlegt sind. Vorzugsweise weist die elektrische Steuerung ein Vergleichsmodul auf, das eingerichtet ist zum Vergleichen der Druck-Farbmessdaten mit den Referenz-Farbmessdaten und Ermitteln eines ersten Maßes einer Abweichung der Druck-Farbmessdaten von den Referenz-Farbmessdaten. Die elektrische Steuerung ist bevorzugt eingerichtet zum Ändern der digitalen Vorlage und/oder der Druckeinstellungen, falls das erste Maß der Abweichung ein erstes vorbestimmtes Kriterium erfüllt. Vorzugsweise weist die Vorrichtung einen Speicher auf, auf dem die Druckeinstellungen hinterlegt sind. Bevorzugt weist die Vorrichtung eine Transporteinrichtung zum Zuführen und Abführen von Druck-Oberflächen in die bzw. aus der Druckeinheit auf.

In einer Weiterbildung der Erfindung weist die Vorrichtung eine Presseinrichtung auf, die eingerichtet ist zum Imprägnieren des Druck-Vorexemplars und Verpressen auf einem Kern mit vorbestimmten Weiterverarbeitungsparametern, so dass ein Druck-Exemplar entsteht. Alternativ oder zusätzlich dazu steht die Vorrichtung in Verbindung mit einer Presseinrichtung. Vorzugsweise weist die Vorrichtung oder die Presseinrichtung einen Sensor auf, der eingerichtet ist zum Messen von Farbmessgrößen des Druck-Exemplars, so dass Druck-Exemplar-Farbmessdaten erhalten werden. Bevorzugt weist die Vorrichtung oder die Presseinrichtung ein Vergleichsmodul auf, das eingerichtet ist zum Vergleichen der Druck-Exemplar-Farbmessdaten mit den Referenz-Exemplar-Farbmessdaten und Ermitteln eines zweiten Maßes einer Abweichung der Druck-Exemplar-Farbmessdaten von den Referenz-Exemplar-Farbmessdaten. Vorzugsweise weist die Vorrichtung oder die Presseinrichtung eine elektronische Datenverarbeitungseinrichtung auf, die eingerichtet ist zum Ändern der digitalen Vorlage, der Druckeinstellungen und/oder der Weiterverarbeitungsparameter, falls das zweite Maß der Abweichung ein zweites vorbestimmtes Kriterium erfüllt.

### Ausführungsbeispiel 1 - Offline Nussbaumdekor

Bei einem Holwerkstoffhersteller insbesondere für Laminatfußbodenpaneele werden Dekore Holz-, Stein- und Fantasiedekore mittels einer Inkjet-Plattendigitaldruckanlage hergestellt. Für die Farbausmusterung und Produktion werden digitale Druckdaten in einer Auflösung von mindestens 300 dpi benötigt. Bei der Neuaufnahme eines Nussbaum-Holzdekors werden Dekordaten erzeugt und so retuschiert, dass Maserung und Aufteilung harmonisch aussehen und freigegeben werden können. Für die Ausmusterung der Farbe wird aus dieser Datei an einer festgelegten Position ein A3-Ausschnitt entnommen und als eine neue Ausmusterungsdatei gespeichert. Von dieser Ausmusterungsdatei werden verschiedene Farbversionen erstellt, von denen die Farbversion 12 für die Kollektion ausgewählt wird. Bei der Freigabe der Farbversionen werden jeweils zwei gedruckte Muster erstellt. Das eine Muster wird getrocknet und verpresst, so dass ein Referenz-Exemplar entsteht, das zur Freigabe verwendet werden kann. Beispielsweise können an dem Referenz-Exemplar Referenz-Exemplar-Farbmessdaten erhoben werden oder es kann ein anderweitiger optischer Vergleich mit einem verpressten Druck-Exemplar erfolgen. Das zweite Muster bleibt unverarbeitet und ist somit ein Referenz-Vorexemplar. An diesem unverarbeiteten Referenz-Vorexemplar können mit einem hyperspektralen Messgerät Referenz-Farbmessdaten erhoben werden. Die Einflüsse von der Verpressung bleiben bei diesem Muster unberücksichtigt. Die Referenz-Farbmessdaten werden gespeichert.

Zudem werden die Farbeinstellungen der Farbversion 12 der Ausmusterungsdatei in die vollumfängliche Produktionsdatei übernommen und gespeichert. Zudem wird eine kleinere Datei (Vergleichsdatei) mit dem festgelegten A3-Ausschnitt aus der Farbversion 12 erstellt und gespeichert. Die Vergleichsdatei entspricht dem Ausschnitt des Referenz-Vorexemplars. Beim Produktionsauftrag des Nussbaumdekors (18 Tage später) wird als erstes die Vergleichsdatei gedruckt und das gedruckte Druck-Vorexemplar ohne Weiterverarbeitung mit einem hyperspektralen Messgerät eingemessen, um Druck-Farbmessdaten zu erhalten. Die Druck-Farbmessdaten werden mit den Referenz-Farbmessdaten verglichen. Dabei wird eine Abweichung von 8,6 % festgestellt. Die Toleranz der Abweichung wurde auf 5 % festgelegt. Das Dekor entspricht demnach noch nicht den Anforderungen an die Druckqualität. Anhand der Messwerte bzw. der berechneten Unterschiede in den Parametern L, a, b, (Lab-Farbraum) bzw. H, L und C (HLC-Farbraum) wird die Vergleichsdatei (digitale Vorlage) verändert und auf der Plattendigitaldruckanlage erneut gedruckt und das neue Druck-Vorexemplar erneut vermessen, bis die Version 12-4 eine Abweichung von 2,6 % erreicht. Diese Farbveränderungen werden dann wiederum in die Produktionsdatei für das gesamte Dekor übernommen und ggf. wird ebenfalls eine neue Vergleichsdatei für eine etwaige nächste, erneute Freigabe des Dekors erstellt. Stichprobenartig werden die Druck-Vorexemplare, die den Anforderungen an die Druckqualität entsprechen, getrocknet, imprägniert und verpresst, so dass Druck-Exemplare entstehen. Diese Druck-Exemplare werden vermessen, so dass Druck-Exemplar-Farbmessdaten erhalten werden, um eine zusätzliche visuelle Kontrolle für die Freigabe der Produktion beispielsweise durch Vergleich mit den Referenz-Exemplar-Farbmessdaten oder einen anderweitigen optischen Vergleich mit einem physischen Referenz-Exemplar zu ermöglichen.

### Ausführungsbeispiel 2 - Inline Eichendekor

Bei einem Holzwerkstoffhersteller werden auf einer Inkjet-Plattendigitaldruckanlage Holz-, Stein- und Fantasiedekore gedruckt. In der Plattendigitaldruckanlage ist ein hyperspektrales Farbmessgerät Inline verbaut. Das Vermessen der Druck-Vorexemplar, um Druck-Farbmessdaten zu erhalten, kann daher in der Plattendigitaldruckanlage und insbesondere zumindest teilweise während des Druckens des zu druckenden Dekors erfolgen. Für die Farbausmusterung und Produktion werden digitale Druckdaten in einer Auflösung von mindestens 300 dpi benötigt. Bei der Neuaufnahme eines Eiche-Holzdekors werden mittels eines hochauflösenden Scanners 14 verschiedene Echtholzbretter gescannt bzw. digitalisiert. Diese Daten werden mittels Software zu einem Format von 205 x 130 cm so retuschiert, dass Maserung und Aufteilung harmonisch aussehen und freigegeben werden können. Für die Ausmusterung der Farbe wird aus dieser Datei an einer festgelegten Position ein A3-Ausschnitt entnommen und als eine neue Ausmusterungsdatei gespeichert. Von dieser Ausmusterungsdatei werden verschiedene Farbversionen erstellt und auf der Papierdigitaldruckanlage gedruckt, getrocknet und verpresst, bis die Farbversion 8 für die Kollektion ausgewählt wird. Die Farbeinstellungen der Farbversion 8 werden aus der Ausmusterungsdatei in die vollumfängliche Produktionsdatei übernommen und gespeichert. Bei der Freigabe der Farbversionen werden jeweils 2 gedruckte Muster erstellt. Das eine Muster wird getrocknet und verpresst, so dass ein Referenz-Exemplar entsteht, das zur Freigabe verwendet werden kann. Beispielsweise können an dem Referenz-Exemplar Referenz-Exemplar-Farbmessdaten erhoben werden oder es kann ein anderweitiger optischer Vergleich mit einem verpressten Druck-Exemplar erfolgen. Das zweite Muster bleibt unverarbeitet und ist somit ein Referenz-Vorexemplar. Das unverarbeitete Referenz-Vorexemplar wird inline mit einem hyperspektralen Messgerät an den vier markanten Positionen vermessen, so dass Referenz-Farbmessdaten entstehen, die gespeichert werden.

Zu Beginn des ersten Produktionsauftrags des Eichendekors (24 Tage später) wird die Produktionsdatei angedruckt und inline mit einem hyperspektralen Messgerät an den vier markanten Positionen des unverarbeiteten Druck-Vorexemplars vermessen, so dass Druck-Farbmessdaten entstehen. Mittels Software wird eine Abweichung der Druck-Farbmessdaten von den Referenz-Messdaten von 5,5 % festgestellt. Die Toleranz für das Eichendekor wurde auf 7 % festgelegt. Das Dekor kann daher produziert und ein Qualitätszertifikat auf Basis der Druck-Farbmessdaten erstellt werden.

### Figurenbeschreibung

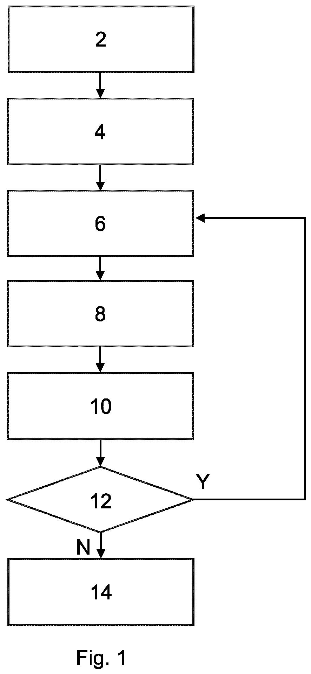

Mithilfe der beiliegenden Zeichnung wird nachfolgend ein Ausführungsbeispiel der vorliegenden Erfindung näher erläutert. Es zeigt
- Figur 1 -: die schematische Darstellung des Ablaufs eines Verfahrens gemäß einem ersten Ausführungsbeispiel der vorliegenden Erfindung.

Figur 1 zeigt schematisch den Ablauf eines Verfahrens gemäß einem erste Ausführungsbeispiel der vorliegenden Erfindung. Zunächst werden in einem ersten Schritt 2 eine digitale Vorlage und Referenz-Farbmessdaten eines zu druckenden

Dekors bereitgestellt. In einem zweiten Schritt 4 wird zumindest ein Teil des zu druckenden Dekors anhand der digitalen Vorlage auf eine Druck-Oberfläche mit Druckeinstellungen der digitalen Druckanlage gedruckt, so dass ein Druck-Vorexemplar entsteht. Die digitale Vorlage enthält dabei Druck-Anweisungen für die digitale Druckanlage, die Informationen darüber enthalten, an welcher Stelle der Druck-Oberfläche welcher Farbwert dargestellt werden soll.

In einem dritten Schritt 6 werden Farbmessgrößen des unverarbeiteten Druck-Vorexemplars gemessen, so dass Druck-Farbmessdaten erhalten werden. Der Vorteil daran, das unverarbeitete Druck-Vorexemplar zu vermessen, besteht insbesondere darin, dass die Farbabweichung des Dekors prozesssicher festgestellt und sodann auf einfache Weise behoben werden kann. Einflüsse der weiteren Verarbeitungsschritte auf die Farbtreue sind nicht in der festgestellten Farbabweichung enthalten, so dass die Druckqualität gezielt optimiert werden kann. Hinzu kommt, dass die Weiterverarbeitungskosten, die für das Imprägnieren und das Verpressen der nicht den Anforderungen an die Druckqualität entsprechenden Dekore entfällt, so dass die Herstellungskosten effektiv reduziert werden können.

Die ermittelten Druck-Farbmessdaten werden in einem vierten Schritt 8 mit den Referenz-Farbmessdaten verglichen und es wird ein erstes Maß der Abweichung der Druck-Farbmessdaten von den Referenz-Farbmessdaten ermittelt. Wenn das erste Maß der Abweichung ein erstes vorbestimmtes Kriterium erfüllt, beispielsweise wenn ein erster vorbestimmter Grenzwert für eine maximale farbliche Abweichung, beispielsweise ein Delta E von 1, zwischen den Druck-Farbmessdaten und den Referenz-Farbmessdaten überschritten ist, werden die digitale Vorlage und/oder die Druckeinstellungen der digitalen Druckanlage in einem fünften Schritt geändert.

Im sechsten Schritt 12 erfolgt eine Feststellung, ob das erste Maß der Abweichung das erste vorbestimmte Kriterium erfüllt. Falls dies bejaht wird (Y), beginnt das Korrekturverfahren erneut ab dem Schritt 4. Sollte dies verneint werden (N), ist das Korrekturverfahren abgeschlossen. Das gedruckte Dekor liegt dann beispielsweise innerhalb einer vorgegebenen Toleranz zu den Referenz-Farbmessdaten.

In einem optionalen siebten Schritt 14 kann eine Serienproduktion des (vollständigen) Dekors erfolgen.

Zur weiteren Reduktion der Kosten für die Farbfreigabe kann es sinnvoll sein, im zweiten Schritt 4 jeweils nur einen Teil des zu druckenden Dekors auf eine Druck-Oberfläche zu drucken. Anschließend kann dann die Serienproduktion (siebter Schritt 14) erfolgen, wobei das vollständige zu druckende Dekor anhand der korrigierten Einstellungen auf eine Vielzahl von Druck-Oberflächen gedruckt wird.

## Patentansprüche

1. Verfahren zum Drucken eines zu druckenden Dekors auf eine Mehrzahl von Druck-Oberflächen mittels einer digitalen Druckanlage, wobei das Verfahren die folgenden Schritte umfasst:
a) Bereitstellen einer digitalen Vorlage und von Referenz-Farbmessdaten eines zu druckenden Dekors, die durch Messen von Farbmessgrößen eines unverarbeiteten Dekors ermittelt wurden,
b) Drucken zumindest eines Teils des zu druckenden Dekors anhand der digitalen Vorlage auf eine Druck-Oberfläche mit Druckeinstellungen der digitalen Druckanlage, so dass ein unverarbeitetes Druck-Vorexemplar entsteht,
c) Messen von Farbmessgrößen des unverarbeiteten Druck-Vorexemplars, so dass Druck-Farbmessdaten erhalten werden,
d) Vergleichen der Druck-Messdaten mit den Referenz-Farbmessdaten und Ermitteln eines ersten Maßes einer Abweichung der Druck-Farbmessdaten von den Referenz-Farbmessdaten,
e) Ändern der digitalen Vorlage und/oder der Druckeinstellungen der digitalen Druckanlage, falls das erste Maß der Abweichung ein erstes vorbestimmtes Kriterium erfüllt,
f) Wiederholen der Schritte b) bis e), falls das erste Maß der Abweichung das erste vorbestimmte Kriterium erfüllt.

2. Verfahren nach Anspruch 1, **dadurch gekennzeichnet, dass** das Bereitstellen der Referenz-Farbmessdaten im Schritt a) folgende Schritte beinhaltet:
a1) Bereitstellen einer digitalen Vorlage eines zu druckenden Dekors,
a2) Drucken zumindest eines Teils des zu druckenden Dekors anhand der digitalen Vorlage auf eine Referenzoberfläche, so dass ein Referenz-Vorexemplar entsteht,
a3) Messen der Farbmessgrößen des unverarbeiteten Referenz-Vorexemplars, so dass die Referenz-Farbmessdaten erhalten werden.

3. Verfahren nach einem der vorstehenden Ansprüche, **dadurch gekennzeichnet, dass** Farbmessdaten hyperspektrale Daten beinhalten.

4. Verfahren nach einem der vorstehenden Ansprüche, **dadurch gekennzeichnet, dass** die Schritte c) bis f) für jede in dem Verfahren bedruckte Druck-Oberfläche erfolgen.

5. Verfahren nach einem der vorstehenden Ansprüche, **dadurch gekennzeichnet, dass** das Messen von Farbmessgrößen des unverarbeiteten Druck-Vorexemplars in der digitalen Druckanlage erfolgt.

6. Verfahren nach einem der vorstehenden Ansprüche, **dadurch gekennzeichnet, dass** das Messen von Farbmessgrößen des unverarbeiteten Druck-Vorexemplars zumindest teilweise, vorzugsweise jedoch vollständig, während des Druckens zumindest eines Teils des zu druckenden Dekors im Verfahrensschritt b) erfolgt.

7. Verfahren nach einem der vorstehenden Ansprüche, **dadurch gekennzeichnet, dass** das Messen von Farbmessgrößen des unverarbeiteten Druck-Vorexemplars und das Messen von Farbmessgrößen des unverarbeiteten Referenz-Vorexemplars unter ersten vorbestimmten Lichtbedingungen erfolgt.

8. Verfahren nach einem der vorstehenden Ansprüche, **dadurch gekennzeichnet, dass** im Schritt b) nur ein Teil des zu druckenden Dekors auf eine Druck-Oberfläche gedruckt wird, wobei das Verfahren ferner folgenden Schritt umfasst:
g) Drucken des vollständigen, zu druckenden Dekors anhand der digitalen Vorlage auf eine erste Vielzahl an Druck-Oberflächen mit den Druckeinstellungen der digitalen Druckanlage.

9. Vorrichtung zum Durchführen eines Verfahren nach einem der vorstehenden Ansprüche mit einer digitalen Druckanlage zum Drucken wenigstens eines Teils des zu druckenden Dekors, wenigstens einem Sensor zum Messen der Farbmessdaten und einer elektrischen Steuerung, die eingerichtet ist zum Durchführen eines Verfahrens gemäß einem der vorstehenden Ansprüche.
